(19) Europäisches Patentamt
European Patent Office
Office européen des brevets

(11) EP 0 992 888 B1

# (12) EUROPEAN PATENT SPECIFICATION

(45) Date of publication and mention of the grant of the patent:
**20.08.2008 Bulletin 2008/34**

(51) Int Cl.:
***G06F 9/32*** *(2006.01)*

(21) Application number: **98402454.7**

(22) Date of filing: **06.10.1998**

## (54) Method and apparatus for iterative instruction execution

Verfahren und Vorrichtung zur iterativen Befehlsausführung

Procédé et dispositif pour execution d'instructions itératives

(84) Designated Contracting States:
**DE FI FR GB SE**

(43) Date of publication of application:
**12.04.2000 Bulletin 2000/15**

(73) Proprietors:
- **TEXAS INSTRUMENTS INC.**
  **Dallas,**
  **Texas 75243 (US)**
  Designated Contracting States:
  **DE FI GB SE**
- **TEXAS INSTRUMENTS FRANCE**
  **06271 Villeneuve Loubet Cédex (FR)**
  Designated Contracting States:
  **FR**

(72) Inventors:
- **Masse, Yves**
  **06410 Biot (FR)**
- **Laurenti, Gilbert**
  **06570 Saint Paul de Vence (FR)**
- **Boyadjian, Alain**
  **06220 Vallauris (FR)**

(74) Representative: **Potter, Julian Mark et al**
**D Young & Co**
**120 Holborn**
**London EC1N 2DY (GB)**

(56) References cited:
**EP-A- 0 206 653**
**EP-A- 0 374 419**
**US-A- 5 056 004**
**US-A- 5 596 760**
**US-A- 5 734 880**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 0 992 888 B1

## Description

FIELD OF THE INVENTION

The present invention relates to processing engines configurable to repeat program flow.

BACKGROUND OF THE INVENTION

It is known to provide for parallel execution of instructions in microprocessors using multiple instruction execution units. Many different architectures are known to provide for such parallel execution. Providing parallel execution increases the overall processing speed. Typically, multiple instructions are provided in parallel in an instruction buffer and these are then decoded in parallel and are dispatched to the execution units. Microprocessors are general purpose processor engines which require high instruction throughputs in order to execute software running thereon, which can have a wide range of processing requirements depending on the particular software applications involved. Moreover, in order to support parallelism, complex operating systems have been necessary to control the scheduling of the instructions for parallel execution.

Many different types of processing engines are known, of which microprocessors are but one example. For example, Digital Signal Processors (DSPs) are widely used, in particular for specific applications. DSPs are typically configured to optimise the performance of the applications concerned and to achieve this they employ more specialised execution units and instruction sets. They have not, however, been provided with the parallel instruction execution architectures found in microprocessors and do not operate under the operating systems used to control such microprocessors.

In a DSP or microprocessor, machine-readable instructions stored in a program memory are sequentially executed by the processor in order for the processor to perform operations or functions. The sequence of machine-readable instructions is termed a "program". Although the program instructions are typically performed sequentially, certain instructions permit the program sequence to be broken, and for the program flow to repeat a block of instructions. Such repetition of a block of instructions is known as "looping", and the block of instructions are known as a "loop". For certain processor applications, in particular signal processing, the processing algorithms require so-called "nested loop" computations. Nested loops are loops of program code which are contained within the body of an outer loop of a program code. Often, the inner loop is a single instruction which needs to be iterated a varying number of times dependent on the current step of the outer loop.

When performing a loop, memory access, for example to program memory, has to be performed in order to fetch the instructions to be repeated. Typically, the memory, such as the program memory, resides off chip and the memory access represents a considerable processor cycle overhead. This mitigates against power saving and fast processing at low power consumption, in particular for applications where program loops are likely to be utilised frequently.

The present invention is directed to improving the performance of processing engines such as, for example but not exclusively, digital signal processors.

The patent application EP-A-0374419 (IBM) dated 27 June 1990 discloses a special instruction (SETLOOP) to initialize loop execution. This instruction includes a field specifying the number of repetitions. This number is loaded into a counter decremented with each execution of the loop. It is not possible to modify the number of repetitions in dependance on the repeated execution of this special instruction.

The patent application EP-A-0864970 (Nokia Mobile Phones) dated 13 March 1998 discloses a digital system comprising a processing engine for triangulation looping. In triangulation looping the number of iterations of an inner loop are dependent on the number of times an outer loop has been run. The processing engine disclosed in EP-A-0864970 shares with the processing engine of the present application that it has means for conveying loop size data from an outer loop to an inner loop.

SUMMARY OF THE INVENTION

The above problem is solved according to the independent claims.

In accordance with a first aspect of the invention there is provided a processing engine, comprising an execution mechanism. The processing engine also comprises a repeat count register and a repeat count index register. The execution mechanism is responsive to a repeat instruction to initialise the repeat count index register with the content of said repeat count register and to modify the content of said repeat count register.

In accordance with a second aspect of the invention there is provided a method for operating a processing engine comprising executing a repeat instruction. The repeat instruction is executed by

i) initialising a repeat count index register with the content of a repeat count register, and

ii) modifying said repeat count register.

Preferred embodiments in accordance with the first and second aspects of the invention provide improved processing throughput by initialising the repeat count index register and modifying the repeat count register in parallel, by combining them in a single instruction. Furthermore, since the repeat count index register is initialised from a register (repeat count register) memory access delays are reduced, and the repeat may be initiated more quickly.
Preferably, the processing engine is responsive to the said repeat instruction comprising first and second parts, and responsive to a first part to initialise said repeat count index register, and to said second part to modify the content of said repeat count register.
Preferably, the second part comprises a data instruction having an operand for modifying the content of said repeat count register.
More preferably, the data instruction comprises an arithmetic operation including said operand and said repeat count register content, suitably implemented by way of an Arithmetic Logic Unit.
The operand may be a constant value, or a register value which would provide flexibility in updating the repeat count register since the register could itself be updated with the result of another operation.
Suitably, the repeat count index register is initialisable from program memory and/or the program and/or a processing register.
The execution mechanism repeats the execution of a subsequent instruction whilst the repeat count index register content satisfies a predetermined condition, which is generally that the register contents are not equal to zero. Typically, the content of the repeat count index register is decremented by one for each execution of the second instruction.
Generally, the processing engine comprises repeat count circuitry including said repeat count index register coupled to a decrement unit for decrementing the content of said repeat count index register, a comparator for comparing the content of said repeat count index with a predetermined value, and a control unit coupled to the output of said comparator to inhibit further execution of said second instruction for said content of repeat count index register corresponding to said predetermined value.
Typically, the execution mechanism comprises an instruction pipeline including a plurality of pipeline stages. The execution mechanism is adapted to be responsive at respective pipeline stages to initialise the repeat count index register and modify the content of the repeat count register. Preferably, the execution mechanism is responsive at an early stage, for example a decode stage of the pipeline, of the instruction pipeline to modify the repeat count index register for execution of the subsequent instruction.
In accordance with the preferred embodiments of the invention, fewer processing cycles are necessary in order to execute repeat cycles having the number of iterations for the next loop updated as part of the current repeat instruction. Consequently, there is a corresponding reduction in power consumption by the data processing apparatus. Therefore, embodiments of the invention are particularly suitable for use in portable apparatus, such as wireless communication devices. Typically, such a wireless communication device comprise a user interface including a display such as liquid crystal display or a TFT display, and a keypad or keyboard for inputting data to the communications device. Additionally, a wireless communication device will also comprise an antenna for wireless communication with a radio telephone network or the like.
Further aspects and advantages of the invention will become apparent from the following description.

## BRIEF DESCRIPTION OF THE DRAWINGS

Particular embodiments in accordance with the invention will now be described, by way of example only, and with reference to the accompanying drawings in which like reference signs are used to denote like parts, unless otherwise stated, and in which:

Figure 1 is a schematic block diagram of a processor in accordance with an embodiment of the invention;
Figure 2 is a schematic diagram of a core of the processor of Figure 1;
Figure 3 is a more detailed schematic block diagram of various execution units of the core of the processor of Figure 1;
Figure 4 is schematic diagram of an instruction buffer queue and an instruction decoder controller of the processor of Figure 1;
Figure 5 is a representation of pipeline phases of the processor of Figure 1;
Figure 6 is a diagrammatic illustration of an example of operation of a pipeline in the processor of Figure 1;
Figure 7 is a schematic representation of the core of the processor for explaining the operation of the pipeline of the processor of Figure 1;
Figure 8 shows the structure of various repeat instructions;
Figure 9 shows two known algorithms for stepping through a data structure;
Figure 10 is a schematic diagram of the circuitry used for an instruction in accordance with a preferred embodiment of the invention;

Figure 11 illustrates the pipeline stages of an instruction in accordance with a preferred embodiment of the invention; and

Figure 12 is a schematic illustration of a wireless communication device suitable for incorporating in an embodiment of the invention.

DESCRIPTION OF PARTICULAR EMBODIMENTS

Although the invention finds particular application to Digital Signal Processors (DSPs), implemented for example in an Application Specific Integrated Circuit (ASIC), it also finds application to other forms of processing engines.

The basic architecture of an example of a processor according to the invention will now be described.

Figure 1 is a schematic overview of a processor 10 forming an exemplary embodiment of the present invention. The processor 10 includes a processing engine 100 and a processor backplane 20. In the present embodiment, the processor is a Digital Signal Processor 10 implemented in an Application Specific Integrated Circuit (ASIC).

As shown in Figure 1, the processing engine 100 forms a central processing unit (CPU) with a processing core 102 and a memory interface, or management, unit 104 for interfacing the processing core 102 with memory units external to the processor core 102.

The processor backplane 20 comprises a backplane bus 22, to which the memory management unit 104 of the processing engine is connected. Also connected to the backplane bus 22 is an instruction cache memory 24, peripheral devices 26 and an external interface 28.

It will be appreciated that in other embodiments, the invention could be implemented using different configurations and/or different technologies. For example, the processing engine 100 could form the processor 10. with the processor backplane 20 being separate therefrom. The processing engine 100 could, for example be a DSP separate from and mounted on a backplane 20 supporting a backplane bus 22, peripheral and external interfaces. The processing engine 100 could, for example, be a microprocessor rather than a DSP and could be implemented in technologies other than ASIC technology. The processing engine, or a processor including the processing engine, could be implemented in one or more integrated circuits.

Figure 2 illustrates the basic structure of an embodiment of the processing core 102. As illustrated, the processing core 102 includes four elements, namely an Instruction Buffer Unit (I Unit) 106 and three execution units. The execution units are a Program Flow Unit (P Unit) 108, Address Data Flow Unit (A Unit) 110 and a Data Computation Unit (D Unit) 112 for executing instructions decoded from the Instruction Buffer Unit (I Unit) 106 and for controlling and monitoring program flow.

Figure 3 illustrates the P Unit 108, A Unit 110 and D Unit 112 of the processing core 102 in more detail and shows the bus structure connecting the various elements of the processing core 102. The P Unit 108 includes, for example, loop control circuitry, GoTo/Branch control circuitry and various registers for controlling and monitoring program flow such as repeat counter registers and interrupt mask, flag or vector registers. The P Unit 108 is coupled to general purpose Data Write busses (EB, FB) 130, 132, Data Read busses (CB, DB) 134, 136 and a coefficient program bus (BB) 138. Additionally, the P Unit 108 is coupled to sub-units within the A Unit 110 and D Unit 112 via various busses labeled CSR, ACB and RGD.

As illustrated in Figure 3, in the present embodiment the A Unit 110 includes a register file 30, a data address generation sub-unit (DAGEN) 32 and an Arithmetic and Logic Unit (ALU) 34. The A Unit register file 30 includes various registers, among which are 16 bit pointer registers (AR0, ..., AR7) and data registers (DR0, .... DR3) which may also be used for data flow as well as address generation. Additionally, the register file includes 16 bit circular buffer registers and 7 bit data page registers. As well as the general purpose busses (EB, FB, CB, DB) 130. 132, 134, 136, a coefficient data bus 140 and a coefficient address bus 142 are coupled to the A Unit register file 30. The A Unit register file 30 is coupled to the A Unit DAGEN unit 32 by unidirectional busses 144 and 146 respectively operating in opposite directions. The DAGEN unit 32 includes 16 bit X/Y registers and coefficient and stack pointer registers, for example for controlling and monitoring address generation within the processing engine 100.

The A Unit 110 also comprises the ALU 34 which includes a shifter function as well as the functions typically associated with an ALU such as addition, subtraction, and AND, OR and XOR logical operators. The ALU 34 is also coupled to the general-purpose busses (EB. DB) 130, 136 and an instruction constant data bus (KDB) 140. The A Unit ALU is coupled to the P Unit 108 by a PDA bus for receiving register content from the P Unit 108 register file. The ALU 34 is also coupled to the A Unit register file 30 by busses RGA and RGB for receiving address and data register contents and by a bus RGD for forwarding address and data registers in the register file 30.

As illustrated, the D Unit 112 includes a D Unit register file 36, a D Unit ALU 38, a D Unit shifter 40 and two multiply and accumulate units (MAC1, MAC2) 42 and 44. The D Unit register file 36. D Unit ALU 38 and D Unit shifter 40 are coupled to busses (EB, FB, CB, DB and KDB) 130, 132, 134, 136 and 140, and the MAC units 42 and 44 are coupled to the busses (CB, DB, KDB) 134, 136, 140 and data read bus (BB) 144. The D Unit register file 36 includes 40-bit accumulators (AC0. ..., AC3) and a 16-bit transition register. The D Unit 112 can also utilize the 16 bit pointer and data registers in the A Unit 110 as source or destination registers in addition to the 40-bit accumulators. The D Unit register file 36 receives data from the D Unit ALU 38 and MACs 1&2 42. 44 over accumulator wite busses (ACW0, ACW1) 146, 148, and from the D Unit shifter 40 over accumulator write bus (ACW1) 148. Data is read from the D Unit register file accumulators to the D Unit ALU 38. D Unit shifter 40 and MACs 1&2 42, 44 over accumulator read busses (ACR0, ACR1) 150, 152. The D Unit ALU 38 and D Unit shifter 40 are also coupled to sub-units of the A Unit 108 via various busses labeled EFC, DRB, DR2 and ACB.

Referring now to Figure 4, there is illustrated an instruction buffer unit 106 comprising a 32 word instruction buffer queue (IBQ) 502. The IBQ 502 comprises 32×16 bit registers 504, logically divided into 8 bit bytes 506. Instructions arrive at the IBQ 502 via the 32-bit program bus (PB) 122. The instructions are fetched in a 32-bit cycle into the location pointed to by the Local Write Program Counter (LWPC) 532. The LWPC 532 is contained in a register located in the P Unit 108. The P Unit 108 also includes the Local Read Program Counter (LRPC) 536 register, and the Write Program Counter (WPC) 530 and Read Program Counter (RPC) 534 registers. LRPC 536 points to the location in the IBQ 502.of the next instruction or instructions to be loaded into the instruction decoder(s) 512 and 514. That is to say, the LRPC 534 points to the location in the IBQ 502 of the instruction currently being dispatched to the decoders 512, 514. The WPC points to the address in program memory of the start of the next 4 bytes of instruction code for the pipeline. For each fetch into the IBQ, the next 4 bytes from the program memory are fetched regardless of instruction boundaries. The RPC 534 points to the address in program memory of the instruction currently being dispatched to the decoder(s) 512 and 514.

The instructions are formed into a 48-bit word and are loaded into the instruction decoders 512, 514 over a 48-bit bus 516 via multiplexors 520 and 521. It will be apparent to a person of ordinary skill in the art that the instructions may be formed into words comprising other than 48-bits, and that the present invention is not limited to the specific embodiment described above.

The bus 516 can load a maximum of two instructions, one per decoder, during any one instruction cycle. The combination of instructions may be in any combination of formats, 8, 16, 24, 32, 40 and 48 bits, which will fit across the 48-bit bus. Decoder 1. 512, is loaded in preference to decoder 2. 514, if only one instruction can be loaded during a cycle. The respective instructions are then forwarded on to the respective function units in order to execute them and to access the data for which the instruction or operation is to be performed. Prior to being passed to the instruction decoders, the instructions are aligned on byte boundaries. The alignment is done based on the format derived for the previous instruction during decoding thereof. The multiplexing associated with the alignment of instructions with byte boundaries is performed in multiplexors 520 and 521.

The processor core 102 executes instructions through a 7 stage pipeline, the respective stages of which will now be described with reference to Figure 5.

The first stage of the pipeline is a PRE-FETCH (P0) stage 202, during which stage a next program memory location is addressed by asserting an address on the address bus (PAB) 118 of a memory interface, or memory management unit 104.

In the next stage, FETCH (P1) stage 204, the program memory is read and the I Unit 106 is filled via the PB bus 122 from the memory management unit 104.

The PRE-FETCH and FETCH stages are separate from the rest of the pipeline stages in that the pipeline can be interrupted during the PRE-FETCH and FETCH stages to break the sequential program flow and point to other instructions in the program memory, for example for a Branch instruction.

The next instruction in the instruction buffer is then dispatched to the decoder/s 512/514 in the third stage, DECODE (P2) 206, where the instruction is decoded and dispatched to the execution unit for executing that instruction, for example to the P Unit 108, the A Unit 110 or the D Unit 112. The decode stage 206 includes decoding at least part of an instruction including a first part indicating the class of the instruction, a second part indicating the format of the instruction and a third part indicating an addressing mode for the instruction.

The next stage is an ADDRESS (P3) stage 208, in which the address of the data to be used in the instruction is computed, or a new program address is computed should the instruction require a program branch or jump. Respective computations take place in the A Unit 110 or the P Unit 108 respectively.

In an ACCESS (P4) stage 210 the address of a read operand is output and the memory operand, the address of which has been generated in a DAGEN X operator with an Xmem indirect addressing mode, is then READ from indirectly addressed X memory (Xmem).

The next stage of the pipeline is the READ (P5) stage 212 in which a memory operand, the address of which has been generated in a DAGEN Y operator with an Ymem indirect addressing mode or in a DAGEN C operator with coefficient address mode, is READ. The address of the memory location to which the result of the instruction is to be written is output.

In the case of dual access, read operands can also be generated in the Y path, and write operands in the X path.

Finally, there is an execution EXEC (P6) stage 214 in which the instruction is executed in either the A Unit 110 or the D Unit 112. The result is then stored in a data register or accumulator, or written to memory for Read/Modify/Write or store instructions. Additionally, shift operations are performed on data in accumulators during the EXEC stage.

The basic principle of operation for a pipeline processor will now be described with reference to Figure 6. As can be seen from Figure 6, for a first instruction 302, the successive pipeline stages take place over time periods $T_1$-$T_7$. Each time period is a clock cycle for the processor machine clock. A second instruction 304, can enter the pipeline in period $T_2$, since the previous instruction has now moved on to the next pipeline stage. For instruction 3. 306, the PRE-FETCH stage 202 occurs in time period $T_3$. As can be seen from Figure 6 for a seven stage pipeline a total of 7 instructions may be processed simultaneously. For all 7 instructions 302-314, Figure 6 shows them all under process in time period $T_7$. Such a structure adds a form of parallelism to the processing of instructions.

As shown in Figure 7, the present embodiment of the invention includes a memory management unit 104 which is coupled to external memory units via a 24 bit address bus 114 and a bi-directional 16 bit data bus 116. Additionally, the memory management unit 104 is coupled to program storage memory (not shown) via a 24 bit address bus 118 and a 32 bit bi-directional data bus 120. The memory management unit 104 is also coupled to the I Unit 106 of the machine processor core 102 via a 32 bit program read bus (PB) 122. The P Unit 108, A Unit 110 and D Unit 112 are coupled to the memory management unit 104 via data read and data write busses and corresponding address busses. The P Unit 108 is further coupled to a program address bus 128.

More particularly, the P Unit 108 is coupled to the memory management unit 104 by a 24 bit program address bus 128, the two 16 bit data write busses (EB, FB) 130, 132, and the two 16 bit data read busses (CB, DB) 134, 136. The A Unit 110 is coupled to the memory management unit 104 via two 24 bit data write address busses (EAB, FAB) 160, 162, the two 16 bit data write busses (EB, FB) 130, 132, the three data read address busses (BAB, CAB, DAB) 164, 166, 168 and the two 16 bit data read busses (CB, DB) 134, 136. The D Unit 112 is coupled to the memory management unit 104 via the two data write busses (EB, FB) 130, 132 and three data read busses (BB, CB, DB) 144, 134, 136.

Figure 7 represents the passing of instructions from the I Unit 106 to the P Unit 108 at 124, for forwarding branch instructions for example. Additionally, Figure 7 represents the passing of data from the I Unit 106 to the A Unit 110 and the D Unit 112 at 126 and 128 respectively.

In general, an instruction for initiating a loop sets up the number of iterations of the loop. This may be done by setting a variable for the maximum number of iterations, that variable being decreased for each iteration and the iteration ceasing when a lower cut-off is reached, or vice versa. Optionally, a parameter such as "step" may be initialised before the loop in order to determine the step-size through which the iteration variable is stepped down from or up to its minimum or maximum value.

As mentioned in the introductory portion of the description, for certain processor applications, in particular signal processing, the processing algorithms require so-called "nested loop" computations. Often, the inner loop is a single instruction which needs to be iterated a varying number of times dependent on the current step of the outer loop. An example of such an algorithms is given below.

Algorithm (1):

```
for ( j = 1 to NUMBER_OF _ITERATION)

    for (i=1 to initial_value + j *iteration_step)
    single_cycle_function (x(i) , y(j ));
```

where j is the current step variable of the outer loop, and i is the current step level of the inner loop. The variable **NUMBER_OF_ITERATION** is the total number of repeats of the outer loop. **Iteration step** is the step-size for the inner loop. Single_cycle _function is an generic description for any suitable single cycle processor instruction or parallel executed instructions. As can be seen, the number of iterations of the inner loop is dependent on the current step (**j**) of the outer loop. The effects of this are diagramatically illustrated in Figure 8.

Fig. 8 shows the number of iterations 802 of the inner loop, increasing as the step position 804 of the outer loop increases, as would be the case for algorithm (1) above. Alternatively, algorithm (1) could be modified such that,

**j** = **NUMBER_OF_ITERATION** to **1**;

In which case the number of iterations 806 of the inner loop would decrease as the step position 808 of the outer loop decreased, as shown in Figure 8b.

Applications where such algorithms may be applied are;

The initialisation phases of FIR/IIR filters;
Symmetrical matrix computations;
Levinson & Schurr like recursions, for example.

Hitherto, such algorithms have been coded "in-line" with the loop argument (**NUMBER_OF_ITERATION**) being part of the programme code as a parameter or immediate constant value. This requires duplication of code and increases the code size overhead for the processor.

Optionally, a known loop structure is used where the loop iteration size parameter is a memory operand. Although such an algorithm uses a looped structure and therefore saves on code size, there is a processor cycle overhead since memory accesses are required. The processor cycle overhead occurs since the instruction pipeline stage where memory is read and the repeat counter register is initialised are different which causes a latency in instruction execution causing a redundant slot.

There is an increasing requirement for electronic apparatus, in particular portable electronic apparatus, to reduce power consumption. Furthermore, for portable electronic apparatus it is desirable to have as an efficient and small a program code size as possible in order to reduce the program memory size and/or increase the functionality of the portable electronic apparatus. The foregoing requirements are not satisfied by known loop methods.

By way of background description known methods of implementing a single loop repeat shall now be described.

Figure 9 of the drawings shows two known algorithms for stepping through a data structure or the like for repeating an operation on separate parts of the data structure. Referring now to the algorithm labelled "State of the Art - 1", line ii) thereof represents the multiplication of two data elements located in data memory at positions pointed to by addressed AR1 and AR2. The "+" indicates that the address AR1 and AR2 are post-incremented after the results of the operation, and the "%" indicates that address AR1 is post-incremented in a circular addressing mode. The "*" indicates an indirect addressing mode. The result of the operation is stored in accumulator 1, AC1. Such an operations is known as a Multiply and Accumulate (MAC) operation. In line (ii) the data elements pointed to by addresses AR1 and AR2 are multiplied together and the result added to the contents of accumulator 1, AC1. Moving on to line (iii), the first part indicates that a high part (bits 31 to 16) of accumulator 2, AC2, are stored in the memory location pointed to by address AR3. The address AR3 is post incremented. The second part of line (iii) show a parallel operation, indicated as parallel by "||", and in which the contents of AC2 are the results of a previous step. The data element pointed to by AR2 is added to the high contents (bits 31 to 16) of accumulator 1, AC 1. Address pointer AR2 is post-decremented by the contents of data register DRØ. The data register contents, DRØ, are decremented by an iteration step value ready for the next operation on the data structure.

Operations (i) through (iv) are repeated for lines (v) through (ix). As can be seen from "State of the Art - 1" instructions (ii) & (iii) are repeated twice explicitly in a first part, and three times in a second part. In this manner of in line coding, it is possible to step through a data structure in memory in steps corresponding to the value "iteration-step", and perform the same function at each step.

An algorithm such as "state of the Art - 1" requires a low level of processor cycles, but requires a large amount of code. For example, 85 words of the 85 cycles for 10 repeats.

Referring now to the algorithm labelled "State of the Art -2" in Figure 9, line (i) thereof initialises a memory variable directly accessible on the current memory page at the address represented by @ inner-counter. Line (ii) is the initialisation of a block_ repeat_counter with the number of repeats for the block given by NB-ITERATION-1. At lines (iii) all the code within the braces at lines (iv) and (xi) will be repeated until the block_repeat_counter is zero. Line (v) performs the same operation as line (i) in "State of the Art - 1", and line (vi) is a single instruction repeat statement responsive to which the repeat counter is fetched from memory address @inner-counter, and which will repeat line (vii). Lines (vii) and (viii) corresponds to lines (ii) and (iii) in "State of the Art - 1". At line (ix) the variable stored at address @inner-counter is incremented by an amount given by the iteration step. Line (x) corresponds to line (iv) of "State of the Art -1'. By utilising nested repeat loops, the same effect as achieved by "State of the Art - 1" may be achieved but with only 13 words of code for 10 repeats, for example. However, the number of processor cycles is relatively high at 141.

In accordance with a preferred embodiment of the invention, the processing engine is responsive to instructions relating to instruction repeat loop management. In a preferred embodiment the execution mechanism is responsive to a Computed Single Repeat (CSR) instruction comprising two parts. The format of the CSR instruction is given below :

repeat (CSR), CSR + = register_content ;

where the op-code "repeat(CSR)" initiates a repeat loop which repeats a following instruction or pair of instructions executable in parallel for example, a number of times corresponding to the value of the content of a Computed Single Repeat (CSR) register. The second part of the instruction modifies the content of the CSR register by adding a value to the content. In the preferred embodiment the value is the content of an A unit 110 register, (DRØ → DR3, ARØ, AR7).

Table 1 shows the instruction format for four types of CSR instruction. The seven left most alphas "O" represent the repeat (CSR) instruction op-code. These are then followed by a parallel enable bit "E", which explicitly enables the repeat (CSR) instruction to be executed in parallel with another instruction. The third group of four alphas from the left represents the post-modification, if any, of the CSR register which may be a constant value or the contents of a register in the A unit 110 register file. The fourth group of four alphas is an op-code extension which is unused for the repeat (CSR) instruction.

Table 1

| Instruction Format | Alpha Code | Description |
|---|---|---|
| OOOO OOOE xxxx oooo | repeat (CSR) | computed repeat with no modify |
| OOOO OOOE kkkk oooo | repeat (CSR), CSR+ = k4 | computed repeat with post modify (positive step k4) |
| OOOO OOOE kkkk oooo | repeat (CSR), CSR- =k4 | computed repeat with post modify (negative step k4) |
| OOOO OOOE FSSS oooo | repeat (CSR), CSR+ =DAx | computed repeat with DAx index post increment |

An example of an algorithm utilising the repeat (CSR) instruction is given bellow:

```
BRC0 = #n
CSR=#initial_value
•
•
•
block repeat {
              repeat (CSR), CSR + = 4
                     AC1 + = (*AR1 + %)*(*AR2+)
};
•
•
•
```

where a block repeat counter BRC0 has an initial value n for a block repeat including the repeat (CSR) instruction.

Referring now to Figure 10, operation of the execution mechanism 900 for a repeat (CSR) instruction for a preferred embodiment of the invention will be described. Execution mechanism 900 comprises a CSR register 902, having an output coupled to an Arithmetic Logic Unit (ALU) 904 and a multiplexor 906. The CSR register may comprise a part of a Register File 908, which resides in the A Unit 110, and is directly coupled to the ALU 904, preferably the A Unit ALU. The Register File 908 may be coupled to a gate 910 controllable by register select line 912, for selectively transferring the content of one of the registers in the Register File 908 to a multiplexor 914. Multiplexor 914 also receives an immediate constant value via data flow 916, and is controllable by control line 918 to selectively forward an immediate constant value or the content of one of the registers in the Register File 908 to the ALU 904. Control line 918 also controls operation of ALU 904.

In response to a repeat (CSR) instruction, the loop is initialised by passing the current contents of the CSR register 902 to the loop counter (repeat count index register) 922, via multiplexor 906.

Loop counter register 922 is coupled to a decrement unit 924 and a comparator unit 926. The content of the loop counter register 922, which represents the index count of the loop, is decreased by 1 in the decrement unit 924, and the modified counter value transferred via data flow 928 to an input of multiplexor 906. It will be clear to a person of ordinary skill in the art that an increment unit may be substituted for the decrement unit 924. Optionally, the decrement/increment unit may comprise a register whose content defines a step size for the loop counter.

Referring now to Figure 11 the instruction flow for a repeat (CSR) instruction will be described. The same nomenclature for the pipeline stages is used as was used in Figure 5. A block repeat counter, BRCØ is initialised, n, prior to the repeat (CSR) instruction entering the instruction pipeline. The CSR register 902 is initialised before entering the repeat block with the repeat count for the first single repeat, for example k. On the decode stage, 1102, of the repeat (CSR) instruction pipeline, the loop counter register 922, RPTC, is updated from the CSR register 902 which gives value k for the first single repeat. During the Exec stage, 1104, of the repeat (CSR) instruction pipeline ALU 904 operation takes place, and the current contents of the CSR register 902 are added to either a constant value or other register contents (for example 4). The result is stored in the CSR register 902 at the end of the Exec stage, thereby updating the register by post-modification. Modification of the CSR register 902, is by way of register (ALU 904) to register (CSR 902) operation, and is a generic register type operation. This is because the update of the CSR register is not timing critical as the repeat (CSR) instruction is typically nested within a block repeat, and the size of the block is sufficient for the update to take place during execution of the block instructions.

The loop counter (922 in Figure 10) RPTC is initialised from the CSR register during the decode stage, 1102, of the repeat (CSR) instruction, and the value read into the loop counter register 922 of the end of the decode stage, shown 1106.

The single instruction is then repeated, 1108, in accordance with value k in the loop counter 922, with the loop counter value being tested, decremented and updated during the address stage of the pipeline. When the single repeat has terminated, i.e. loop counter 922 value = Ø, the rest of the repeat block is executed.

For the next entry into the repeat block, the CSR register 902 value is loaded into the loop counter 922, and then updated in the Exec stage of the pipeline ready for the next block repeat.

A preferred embodiment of a processing engine configured to operate in accordance with the foregoing provides an advantageous method and apparatus for providing increasing levels of iteration for repeat single instructions dependent on the iteration level of an outer loop.

Embodiments of the invention are suitable for wireless communication devices such as a radio telephone 50 illustrated in Fig. 12. Such a radio telephone 50 comprises a user interface 52 including a display 54 such as a liquid crystal display, and a key pad 56. The radio telephone also includes a transceiver, not shown, and an antenna 58.

## Claims

**1.** A digital system having a processing engine, the processing engine comprising:

a loop counter register (922) storing a loop count amount;
a decrementer (924) connected to said loop counter register operative to decrement said stored loop count amount each operational cycle;
a comparator (926) connected to said loop counter register operative to compare a current loop count amount to zero and generate an equals zero signal (930) when said loop count amount equals zero;
a computed single repeat register (902) storing a computed single repeat number designating an inner loop count for an iteration of an outer loop;
an arithmetic logic unit (904) having a first input connected to said computed single repeat register, a second input receiving an update amount specified in a computed single repeat instruction and an output connected to said computed single repeat register for adding said computed single repeat number to said instruction specified data and storing a sum in said computed single repeat register; and
a control unit (932) connected to said comparator (926) responsive to said computed single repeat instruction to store said computed single repeat number stored in
said computed single repeat register in said loop counter
register, and
to repeat an instruction immediately following said computed single repeat instruction each operational, cycle until said comparator (926) generates said equals zero signal (930).

**2.** The digital system of claim 1, wherein:

said update amount is specified by an immediate field within the computed single repeat instruction.

**3.** The digital system of claim 1, wherein:

said update amount is stored in a data register specified by the computed single repeat instruction.

**4.** A method of data processing with nested loops wherein an inner loop operates a different computed number of times for each operation of an outer loop comprising the steps of:

loading an outer loop count into a block repeat register;
loading an inner loop count for a first iteration of the outer loop into a computed single repeat register (902),
specifying in a computed single repeat instruction an update amount for updating the initial loop count each iteration of the outer loop;
in response to a block repeat instruction encompassing said computed single repeat instruction and a single inner loop instruction to be repeated, for each iteration of the outer loop

loading the initial inner loop count stored in the computed single repeat register into an inner loop counter register (922),
updating the inner loop count stored in the single repeat count register by the update amount,
executing the single inner loop instruction a number of times equal to the inner loop count,

until the number of executed iterations of the outer loop is equal to the outer loop count.

**5.** The method of claim 4, wherein:

said step of specifying an update amount specifies the update amount by an immediate field within the computed single repeat instruction.

**6.** The method claim 4, wherein:

said step of specifying an update amount specifies a data register storing the update amount within the computed single repeat instruction.

**Patentansprüche**

**1.** Digitales System mit einer Verarbeitungsmaschine, wobei die Verarbeitungsmaschine folgendes umfasst:

ein Schleifenzählerregister (922), das einen Schleifenzählerstand speichert,
einen mit dem Schleifenzählerregister verbundenen Dekrementierer (924), der so betrieben werden kann, dass er in jedem Betriebszyklus den gespeicherten Schleifenzählerstand dekrementiert,
einen mit dem Schleifenzählerregister verbundenen Komparator (926), der so betrieben werden kann, dass er einen aktuellen Schleifenzählerstand mit null vergleicht und ein Gleich-Null-Signal (930) erzeugt, wenn der Schleifenzählerstand gleich null ist,
ein Register (902) für eine berechnete einzelne Wiederholung, das eine berechnete einzelne Wiederholungszahl speichert, die einen Zählerstand der inneren Schleife für eine Iteration einer äußeren Schleife bezeichnet,
eine Arithmetik/Logik-Einheit (904) mit einem ersten Eingang, der mit dem Register für die berechnete einzelne Wiederholung verbunden ist, einem zweiten Eingang, der einen in einem berechneten einzelnen Wiederholungsbefehl angegebenen Aktualisierungsstand empfängt, sowie einem Ausgang, der mit dem Register für die berechnete einzelne Wiederholung verbunden ist, zum Addieren der berechneten einzelnen Wiederholungszahl zu den befehlsinternen Daten und zum Speichern einer Summe im Register für die berechnete einzelne Wiederholung, und
eine Steuereinheit (932), die mit dem Komparator (926) verbunden ist und auf den berechneten einzelnen Wiederholungsbefehl anspricht,
zur Speicherung der berechneten einzelnen Wiederholungszahl, die im Register für die berechnete einzelne Wiederholung im Schleifenzählerregister
gespeichert ist, und
zur Wiederholung eines unmittelbar auf den berechneten einzelnen Wiederholungsbefehl folgenden Befehls in jedem Betriebszyklus, bis der Komparator (926) das Gleich-Null-Signal (930) erzeugt.

**2.** Digitales System nach Anspruch 1, bei dem der Aktualisierungsstand von einem direkten Feld innerhalb des berechneten einzelnen Wiederholungsbefehls angegeben wird.

**3.** Digitales System nach Anspruch 1, bei dem der Aktualisierungsstand in einem von dem berechneten einzelnen Wiederholungsbefehl angegebenen Datenregister gespeichert wird.

**4.** Verfahren zur Datenverarbeitung mit verschachtelten Schleifen, bei dem eine innere Schleife eine unterschiedliche berechnete Anzahl von Malen pro Operation einer äußeren Schleife operiert, mit den folgenden Schritten:

ein Zählerstand der äußeren Schleife wird in ein Blockwiederholungsregister geladen,
ein Zählerstand der inneren Schleife wird für eine erste Iteration der äußeren Schleife in ein Register (902) für eine berechnete einzelne Wiederholung geladen,
in einem berechneten einzelnen Wiederholungsbefehl wird ein Aktualisierungsstand zur Aktualisierung des anfänglichen Schleifenzählerstandes bei jeder Iteration der äußeren Schleife angegeben,
als Reaktion auf einen Blockwiederholungsbefehl, der den berechneten einzelnen Wiederholungsbefehl und einen zu wiederholenden einzelnen Befehl für die innere Schleife beinhaltet, wird für jede Iteration der äußeren Schleife
der im Register für die berechnete einzelne Wiederholung gespeicherte
anfängliche Zählerstand der inneren Schleife in ein Zählerregister (922) für
die innere Schleife geladen,
der im Zählerregister für die einzelne Wiederholung gespeicherte Zählerstand der inneren Schleife mit dem Aktualisierungsstand aktualisiert,
der einzelne Befehl für die innere Schleife eine Anzahl von Malen, die gleich dem Zählerstand der inneren Schleife ist, ausgeführt,
bis die Anzahl ausgeführter Iterationen der äußeren Schleife gleich dem Zählerstand der äußeren Schleife ist.

**5.** Verfahren nach Anspruch 4, bei dem bei dem Schritt, bei dem ein Aktualisierungsstand angegeben wird, der Aktualisierungsstand von einem direkten Feld innerhalb des berechneten einzelnen Wiederholungsbefehls angegeben wird.

**6.** Verfahren nach Anspruch 4, bei dem bei dem Schritt, bei dem ein Aktualisierungsstand angegeben wird, ein Datenregister, in dem der Aktualisierungsstand innerhalb des berechneten einzelnen Wiederholungsbefehls gespeichert wird, angegeben wird.

## Revendications

**1.** Système numérique disposant d'un moteur de traitement, le moteur de traitement comprenant :

un registre de comptage de boucles (922) stockant une quantité de comptage de boucles ;
un décrémenteur (924) connecté audit registre de comptage de boucles, opérationnel pour décrémenter ladite quantité de comptage de boucles stockée à chaque cycle opérationnel ;
un comparateur (926) connecté audit registre de comptage de boucles opérationnel pour comparer une quantité de comptage de boucles actuelle à zéro, et pour générer un signal d'égalité à zéro (930) lorsque ladite quantité de comptage de boucles est égale à zéro ;
un registre de répétition unique calculée (902) stockant un nombre de répétition unique calculée indiquant un comptage de boucles internes d'une itération d'une boucle externe ;
une unité arithmétique logique (904) ayant une première entrée connectée audit registre de répétition unique calculée, une seconde entrée recevant une quantité de mise à jour spécifiée dans une instruction de répétition unique calculée et une sortie connectée audit registre de répétition unique calculée pour additionner ledit nombre de répétition unique calculée auxdites données spécifiées dans l'instruction et stocker une somme dans ledit registre d'instructions uniques calculées ; et
une unité de commande (932) connectée audit comparateur (926) en réponse à ladite instruction de répétition unique calculée
pour stocker ledit nombre de répétition unique calculée stocké dans ledit registre de répétition unique calculée dans ledit registre de comptage de boucles, et
pour répéter une instruction immédiatement après ladite instruction de répétition unique calculée à chaque cycle opérationnel jusqu'à ce que ledit comparateur (926) génère ledit signal d'égalité à zéro (930).

**2.** Système numérique selon la revendication 1, dans lequel :

ladite quantité de mise à jour est spécifiée par un champ immédiat à l'intérieur de l'instruction de répétition unique calculée.

**3.** Système numérique selon la revendication 1, dans lequel :

ladite quantité de mise à jour est stockée dans un registre de données spécifié par l'instruction de répétition unique calculée.

**4.** Procédé de traitement de données avec des boucles imbriquées dans lequel:

une boucle interne agit un nombre de fois calculé différent pour chaque exécution d'une boucle externe comprenant les étapes consistant à :

charger un comptage de boucles externes dans un registre de répétition de blocs ;
charger un comptage de boucles internes pour une première itération de la boucle externe dans un registre de répétition unique calculée (902) ;
spécifier dans une instruction de répétition unique calculée une quantité de mise à jour pour mettre à jour le comptage de boucles initial à chaque itération de la boucle externe ;
en réponse à une instruction de répétition de blocs englobant ladite instruction de répétition unique calculée et une instruction de boucle interne unique à répéter, pour chaque itération de la boucle externe
charger le comptage de boucles internes initial stocké dans le registre de répétition unique calculée dans un registre de comptage de boucles internes (922) ;
mettre à jour le comptage de boucles internes stocké dans le registre de comptage de répétition unique avec la quantité de mise à jour,
exécuter l'instruction de boucle interne unique un certain nombre de fois égal au comptage de boucle interne, jusqu'à ce que le nombre d'itérations exécutées de la

boucle externe soit égal au comptage de boucle externe.

**5.** Procédé selon la revendication 4, dans lequel :

ladite étape consistant à spécifier une quantité de mise à jour spécifie la quantité de mise à jour par un champ immédiat à l'intérieur de l'instruction de répétition unique calculée.

**6.** Procédé selon la revendication 4, dans lequel :

ladite étape consistant à spécifier une quantité de mise à jour spécifie un registre de données qui stocke la quantité de mise à jour à l'intérieur de l'instruction de répétition unique calculée.

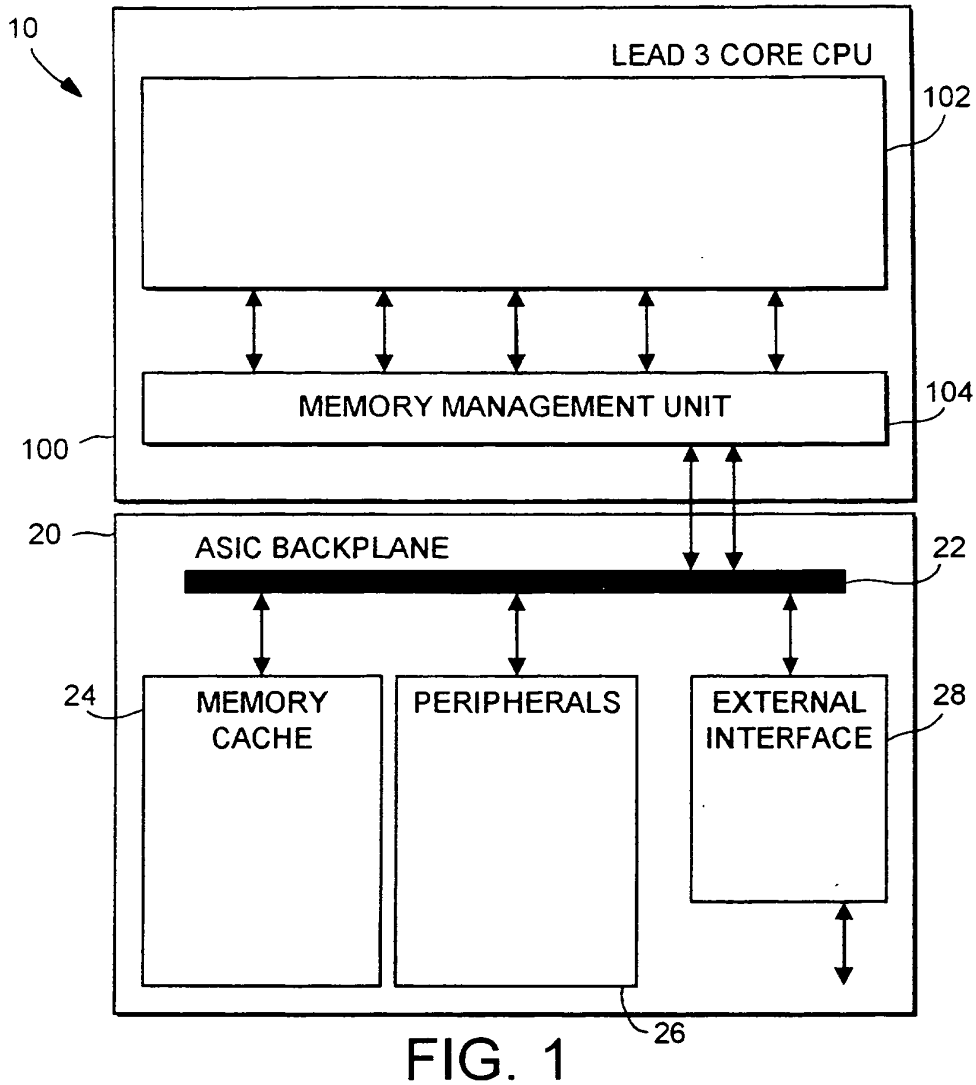
10
LEAD 3 CORE CPU
102
MEMORY MANAGEMENT UNIT
104
100
20
ASIC BACKPLANE
22
24
MEMORY CACHE
PERIPHERALS
EXTERNAL INTERFACE
28
26

FIG. 1

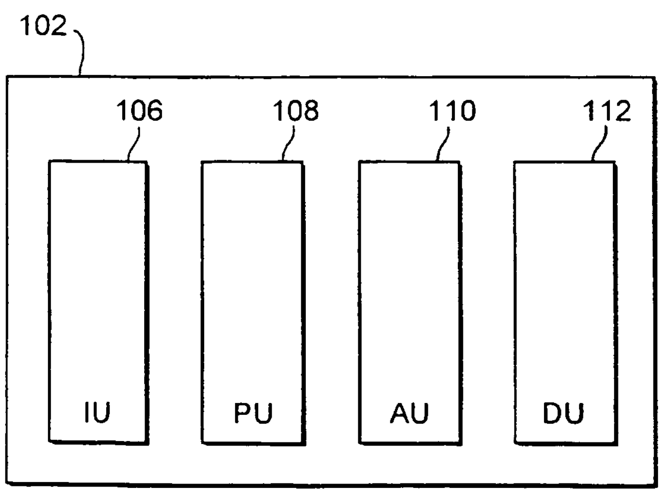
102
106
108
110
112
IU
PU
AU
DU

FIG. 2

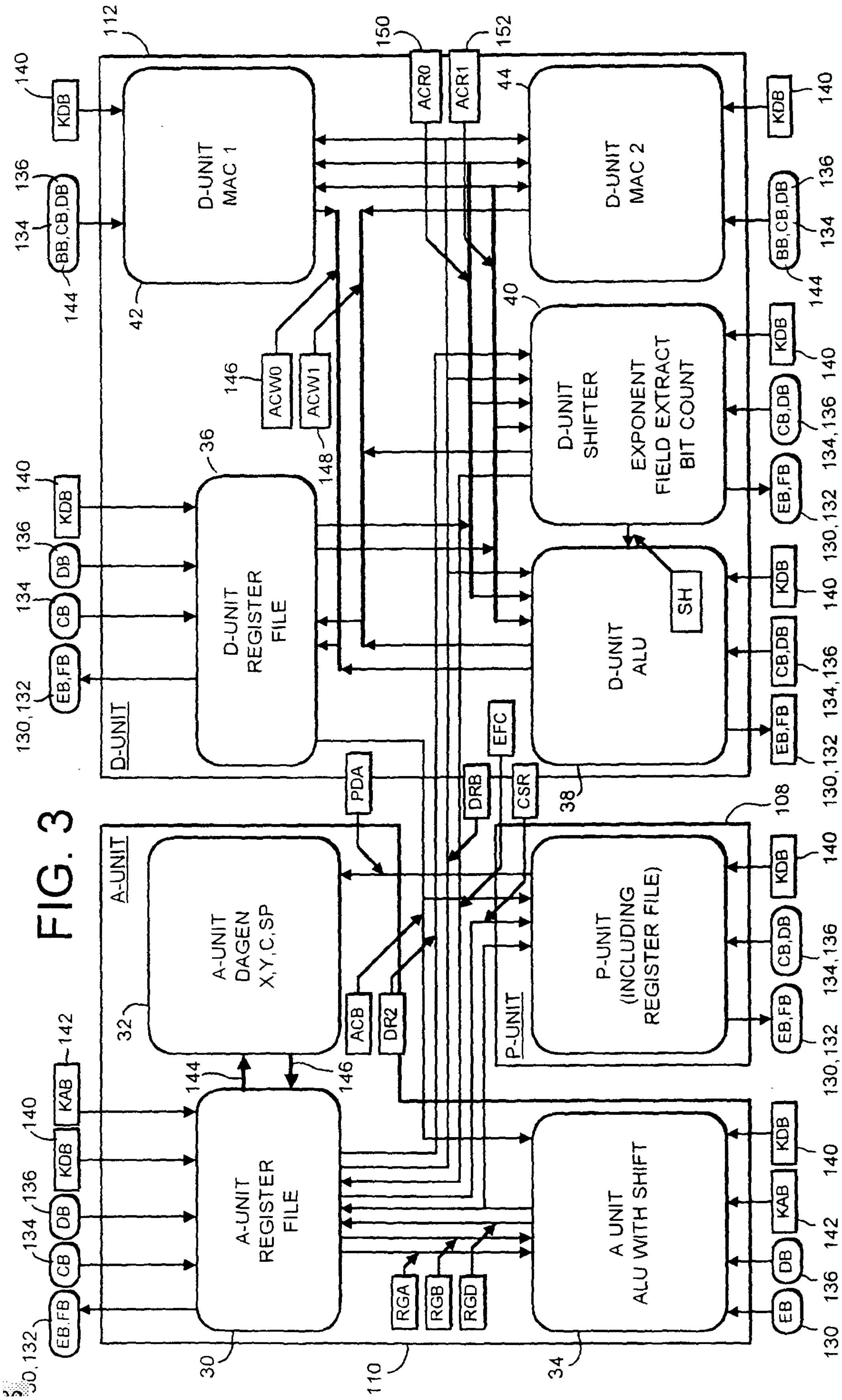
D-UNIT
D-UNIT MAC 1
D-UNIT MAC 2
D-UNIT REGISTER FILE
D-UNIT SHIFTER
EXPONENT FIELD EXTRACT BIT COUNT
D-UNIT ALU
SH
ACW0
ACW1
ACR0
ACR1
PDA
DRB
EFC
CSR
A-UNIT
A-UNIT DAGEN X,Y,C,SP
A-UNIT REGISTER FILE
A UNIT ALU WITH SHIFT
P-UNIT
P-UNIT (INCLUDING REGISTER FILE)
ACB
DR2
RGA
RGB
RGD
KDB
KAB
DB
CB
EB
EB,FB
CB,DB
BB,CB,DB

FIG. 3

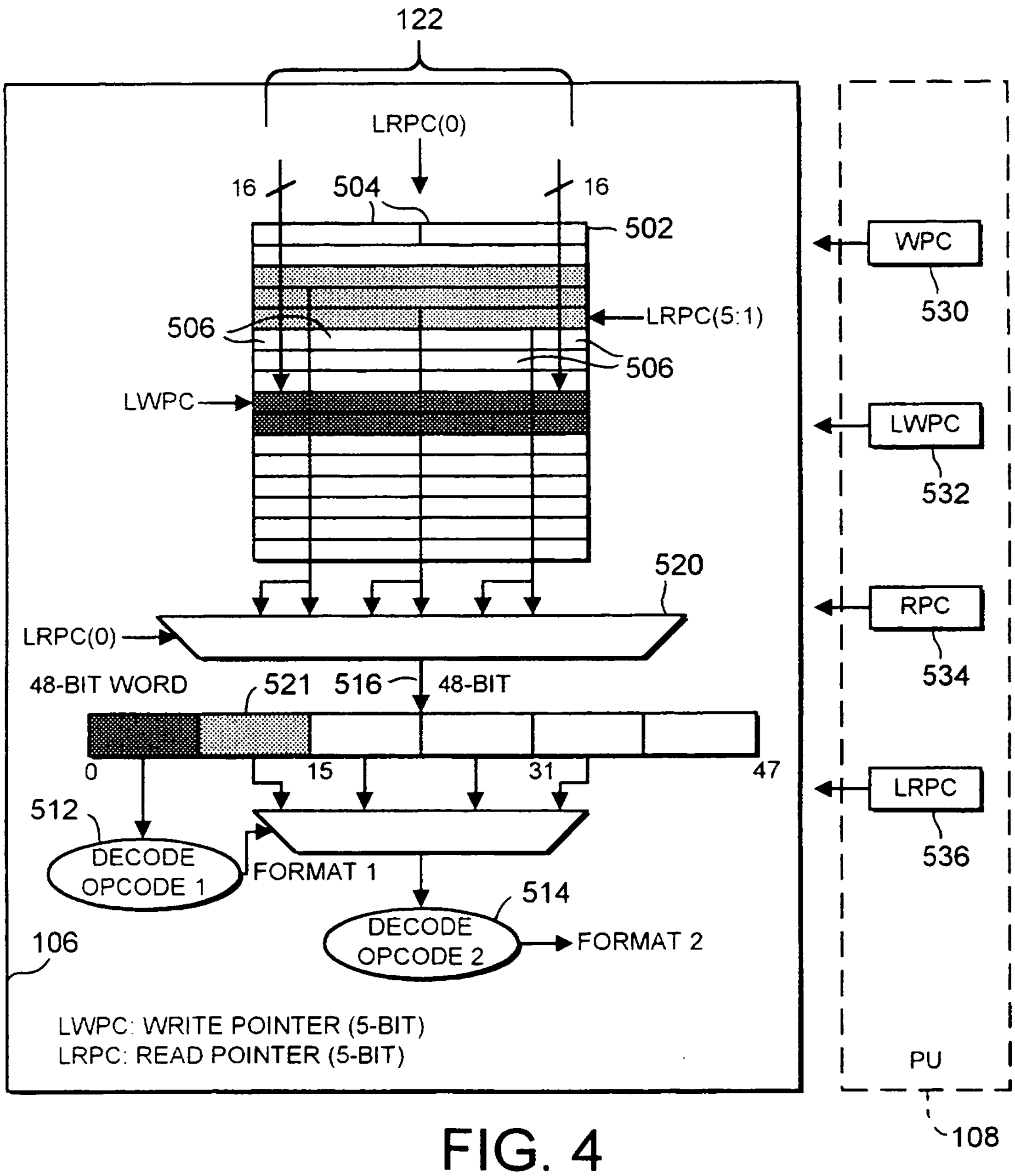
122
LRPC(0)
16
504
16
502
WPC
530
506
LRPC(5:1)
506
LWPC
LWPC
532
520
RPC
534
LRPC(0)
48-BIT WORD
521
516
48-BIT
0
15
31
47
LRPC
536
512
DECODE OPCODE 1
FORMAT 1
514
106
DECODE OPCODE 2
FORMAT 2
LWPC: WRITE POINTER (5-BIT)
LRPC: READ POINTER (5-BIT)
PU
108

FIG. 4

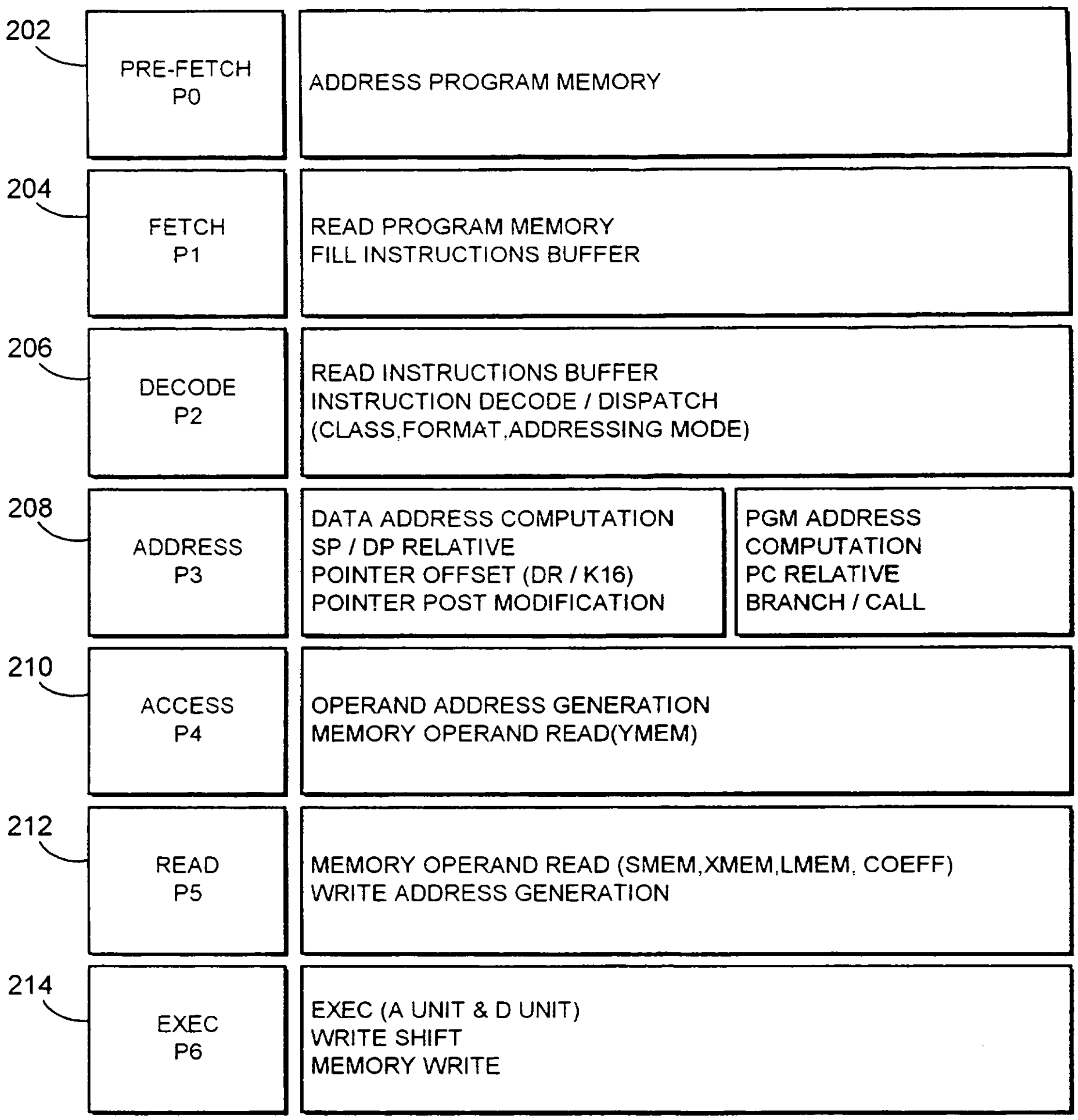
202
PRE-FETCH
P0
ADDRESS PROGRAM MEMORY
204
FETCH
P1
READ PROGRAM MEMORY
FILL INSTRUCTIONS BUFFER
206
DECODE
P2
READ INSTRUCTIONS BUFFER
INSTRUCTION DECODE / DISPATCH
(CLASS,FORMAT,ADDRESSING MODE)
208
ADDRESS
P3
DATA ADDRESS COMPUTATION
SP / DP RELATIVE
POINTER OFFSET (DR / K16)
POINTER POST MODIFICATION
PGM ADDRESS
COMPUTATION
PC RELATIVE
BRANCH / CALL
210
ACCESS
P4
OPERAND ADDRESS GENERATION
MEMORY OPERAND READ(YMEM)
212
READ
P5
MEMORY OPERAND READ (SMEM,XMEM,LMEM, COEFF)
WRITE ADDRESS GENERATION
214
EXEC
P6
EXEC (A UNIT & D UNIT)
WRITE SHIFT
MEMORY WRITE

FIG. 5

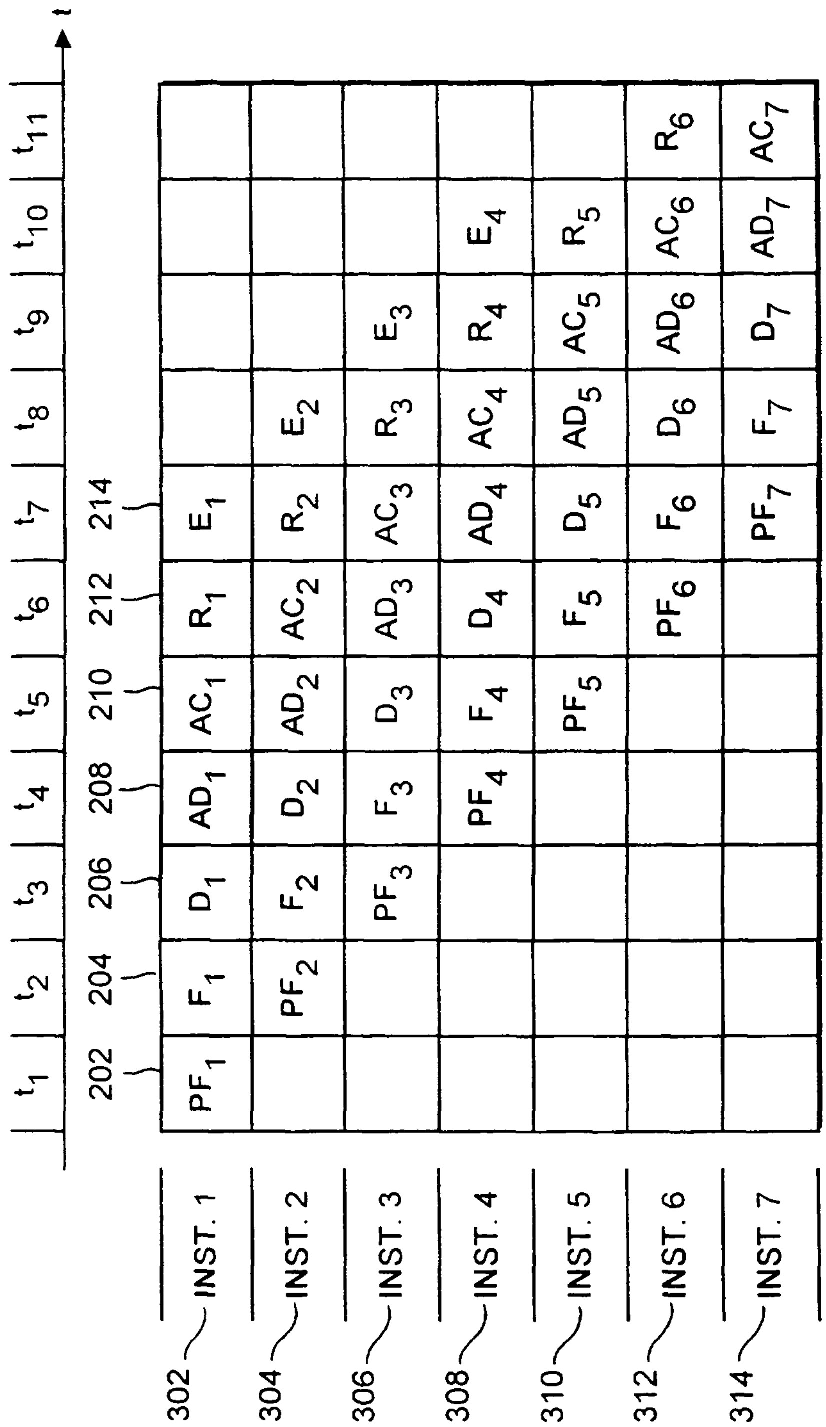
$t_1$ $t_2$ $t_3$ $t_4$ $t_5$ $t_6$ $t_7$ $t_8$ $t_9$ $t_{10}$ $t_{11}$ t
202 204 206 208 210 212 214
302 INST. 1 $PF_1$ $F_1$ $D_1$ $AD_1$ $AC_1$ $R_1$ $E_1$
304 INST. 2 $PF_2$ $F_2$ $D_2$ $AD_2$ $AC_2$ $R_2$ $E_2$
306 INST. 3 $PF_3$ $F_3$ $D_3$ $AD_3$ $AC_3$ $R_3$ $E_3$
308 INST. 4 $PF_4$ $F_4$ $D_4$ $AD_4$ $AC_4$ $R_4$ $E_4$
310 INST. 5 $PF_5$ $F_5$ $D_5$ $AD_5$ $AC_5$ $R_5$
312 INST. 6 $PF_6$ $F_6$ $D_6$ $AD_6$ $AC_6$ $R_6$
314 INST. 7 $PF_7$ $F_7$ $D_7$ $AD_7$ $AC_7$

FIG. 6

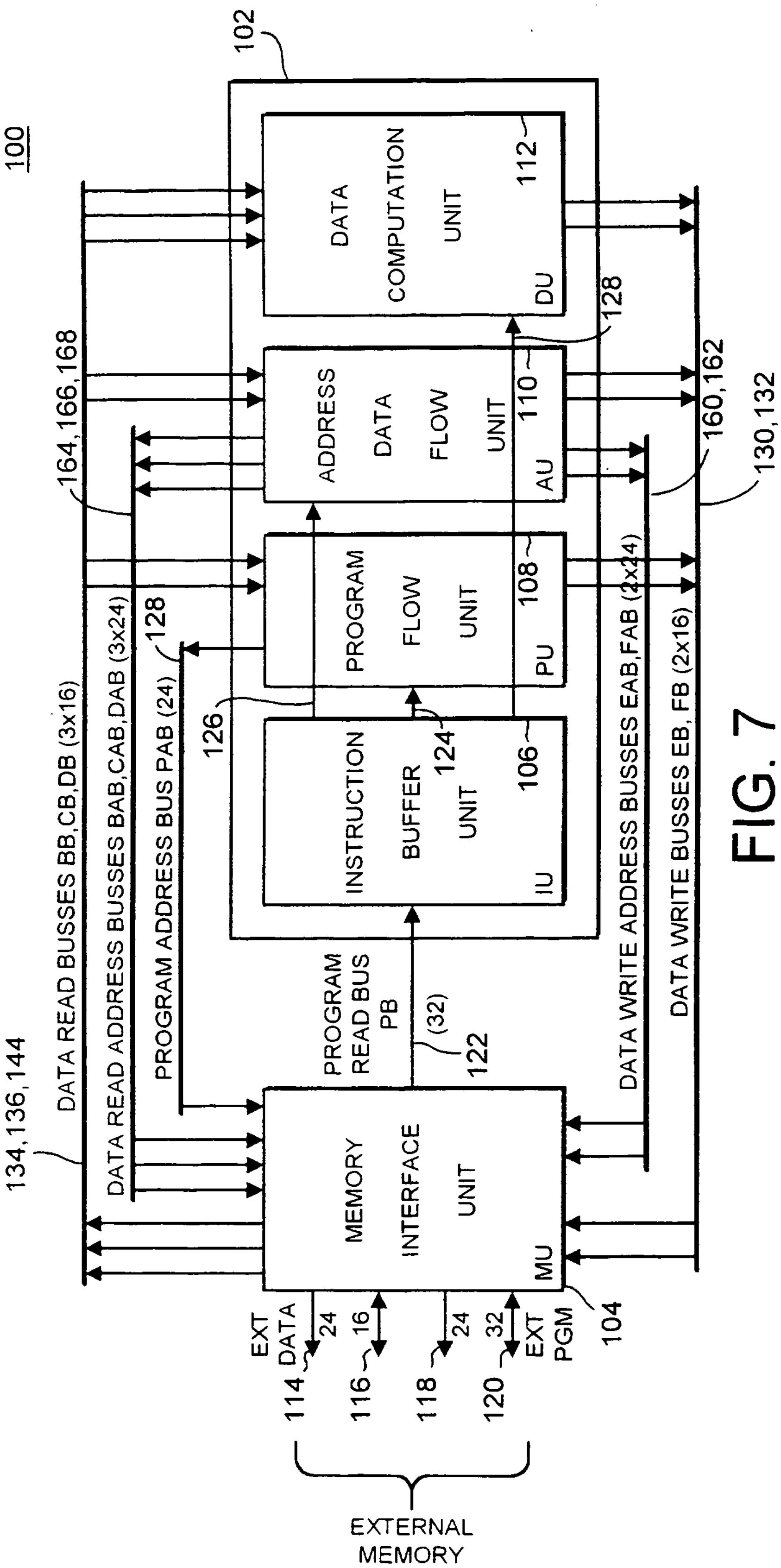
100
102
DATA COMPUTATION UNIT
112
DU
ADDRESS DATA FLOW UNIT
110
AU
PROGRAM FLOW UNIT
108
PU
INSTRUCTION BUFFER UNIT
106
IU
124
126
128
MEMORY INTERFACE UNIT
MU
104
DATA READ BUSSES BB,CB,DB (3x16)
DATA READ ADDRESS BUSSES BAB,CAB,DAB (3x24)
PROGRAM ADDRESS BUS PAB (24)
PROGRAM READ BUS PB
(32)
122
DATA WRITE ADDRESS BUSSES EAB,FAB (2x24)
DATA WRITE BUSSES EB, FB (2x16)
134,136,144
164,166,168
160,162
130,132
EXT DATA
114
24
116
16
118
24
120
32
EXT PGM
EXTERNAL MEMORY

FIG. 7

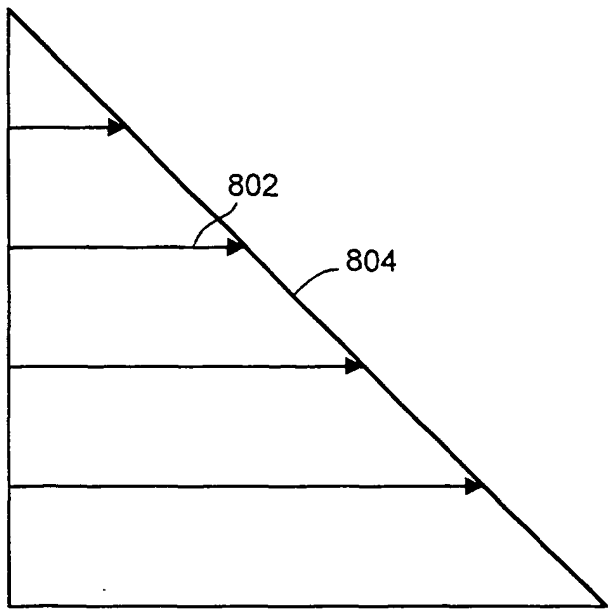


FIG. 8A

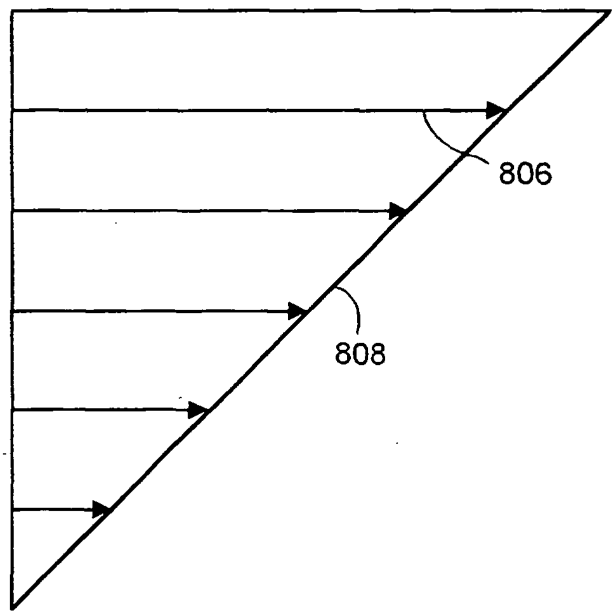


FIG. 8A

| | STATE OF THE ART -1- | STATE OF THE ART -2- |
|---|---|---|
| DATA ORGANIZATION | AR1 --> MEMORY DATA INPUT ARRAY<br>AR2 --> MEMORY DATA INPUT ARRAY<br>AR3 --> MEMORY DATA INPUT ARRAY | |
| ALGORITHM STRUCTURE | (i) AC1 = (*AR1 + %) * (*AR2+)<br>(ii) AC1 += (*AR1 + %) * (*AR2+)<br>(iii) { (*AR3+) = HIGH (AC2)<br>I I AC2 = AC1 + (*AR2 - DR0) << 16 }<br>(iv) DR0 -= #ITERATION_STEP<br><br>(v) AC1 = (*AR1 + %) * (*AR2+)<br>(vi) AC1 += (*AR1 + %) * (*AR2+)<br>(vii) AC1 += (*AR1 + %) * (*AR2+)<br>(viii) { (*AR3+) = HIGH (AC2)<br>I I AC2 = AC1 + (*AR2 - DR0) << 16 }<br>(ix) DR0 -= #ITERATION_STEP | @ INNER_COUNTER = #1-1 (i)<br>BLOCK_REPEAT_COUNTER = #NB_ITERATION-1 (ii)<br>BLOCK_REPEAT (iii)<br>{ (iv)<br>AC1 = (*AR1 + %) * (*AR2+) (v)<br>REPEAT @INNER_COUNTER (vi)<br>AC1 += (*AR1 + %) * (*AR2+) (vii)<br>(*AR3+) = HIGH (AC2)<br>I I AC2 = AC1 + (*AR2 - DR0) << 16 } (viii)<br>@INNER_COUNTER += #ITERATION_STEP (ix)<br>DR0 -= #ITERATION_STEP (x)<br>} (xi) |
| CODE SIZE | 85 WORDS | 13 WORDS |
| CYCLES | (N+7)*N/2 = 85 WHEN N = 10 | (N+7)*N/2 + 5*N +6 = 141 WHEN N = 10 |

FIG. 9

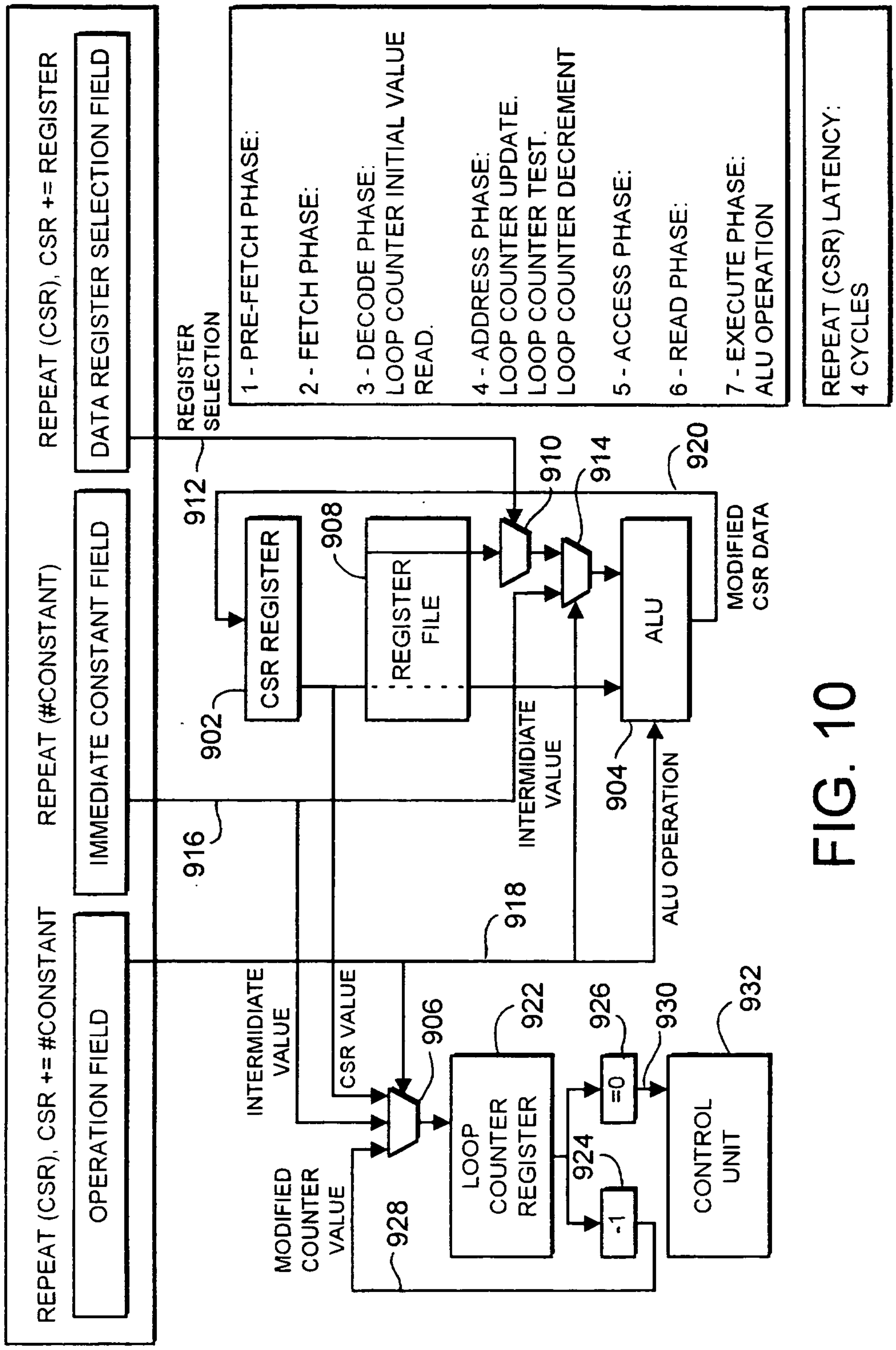
REPEAT (CSR), CSR += #CONSTANT
OPERATION FIELD
REPEAT (#CONSTANT)
IMMEDIATE CONSTANT FIELD
REPEAT (CSR), CSR += REGISTER
DATA REGISTER SELECTION FIELD
1 - PRE-FETCH PHASE:
2 - FETCH PHASE:
3 - DECODE PHASE:
LOOP COUNTER INITIAL VALUE READ.
4 - ADDRESS PHASE:
LOOP COUNTER UPDATE.
LOOP COUNTER TEST.
LOOP COUNTER DECREMENT
5 - ACCESS PHASE:
6 - READ PHASE:
7 - EXECUTE PHASE:
ALU OPERATION
REPEAT (CSR) LATENCY:
4 CYCLES
REGISTER SELECTION
912
902
CSR REGISTER
908
REGISTER FILE
910
914
920
ALU
MODIFIED CSR DATA
916
INTERMIDIATE VALUE
904
ALU OPERATION
918
INTERMIDIATE VALUE
CSR VALUE
906
922
LOOP COUNTER REGISTER
926
=0
930
932
CONTROL UNIT
924
-1
MODIFIED COUNTER VALUE
928

FIG. 10

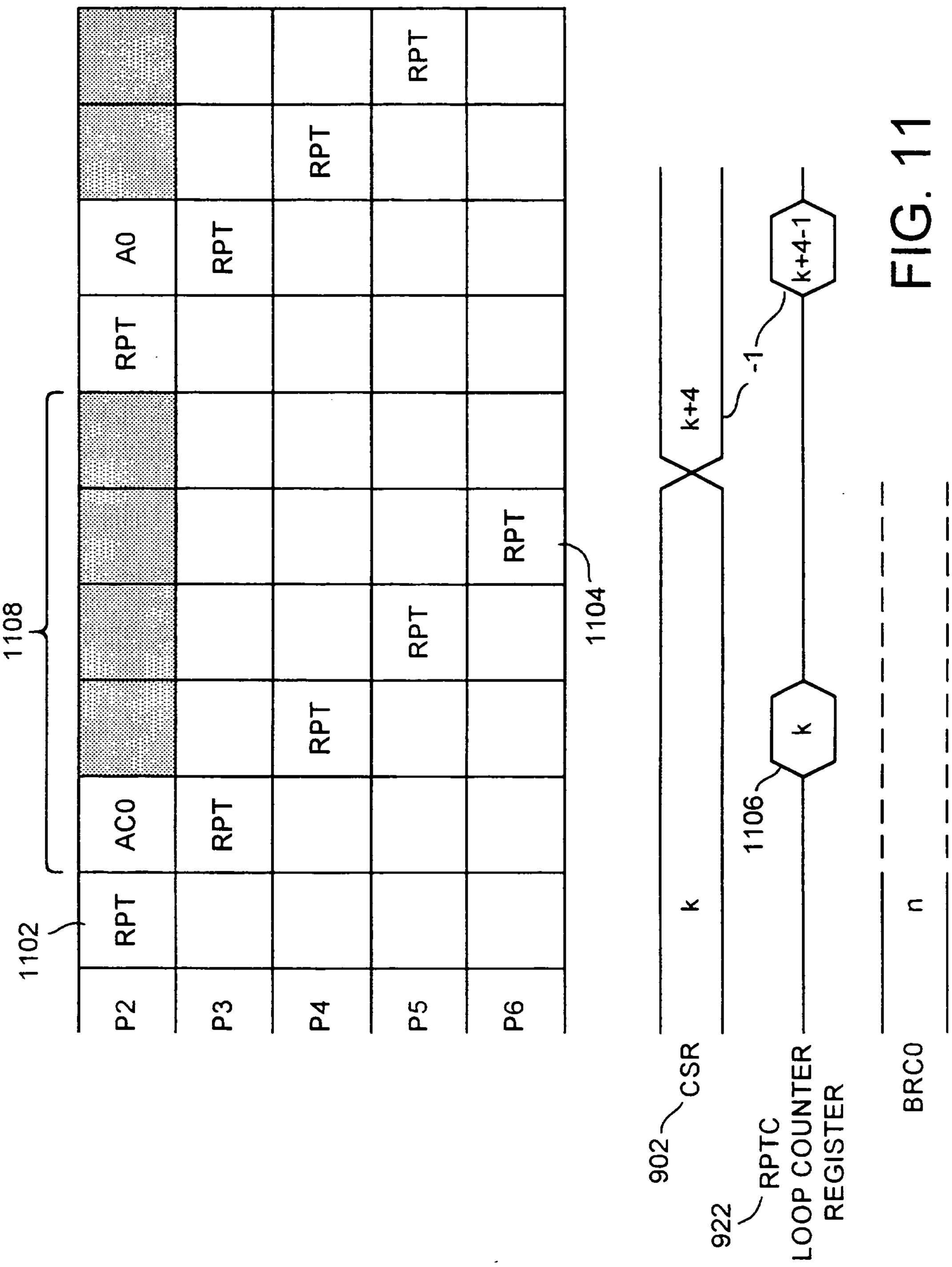
1102
1108
1104
1106
P2
P3
P4
P5
P6
RPT
AC0
A0
k
k+4
-1
k+4-1
n
902
CSR
922
RPTC
LOOP COUNTER
REGISTER
BRC0

FIG. 11

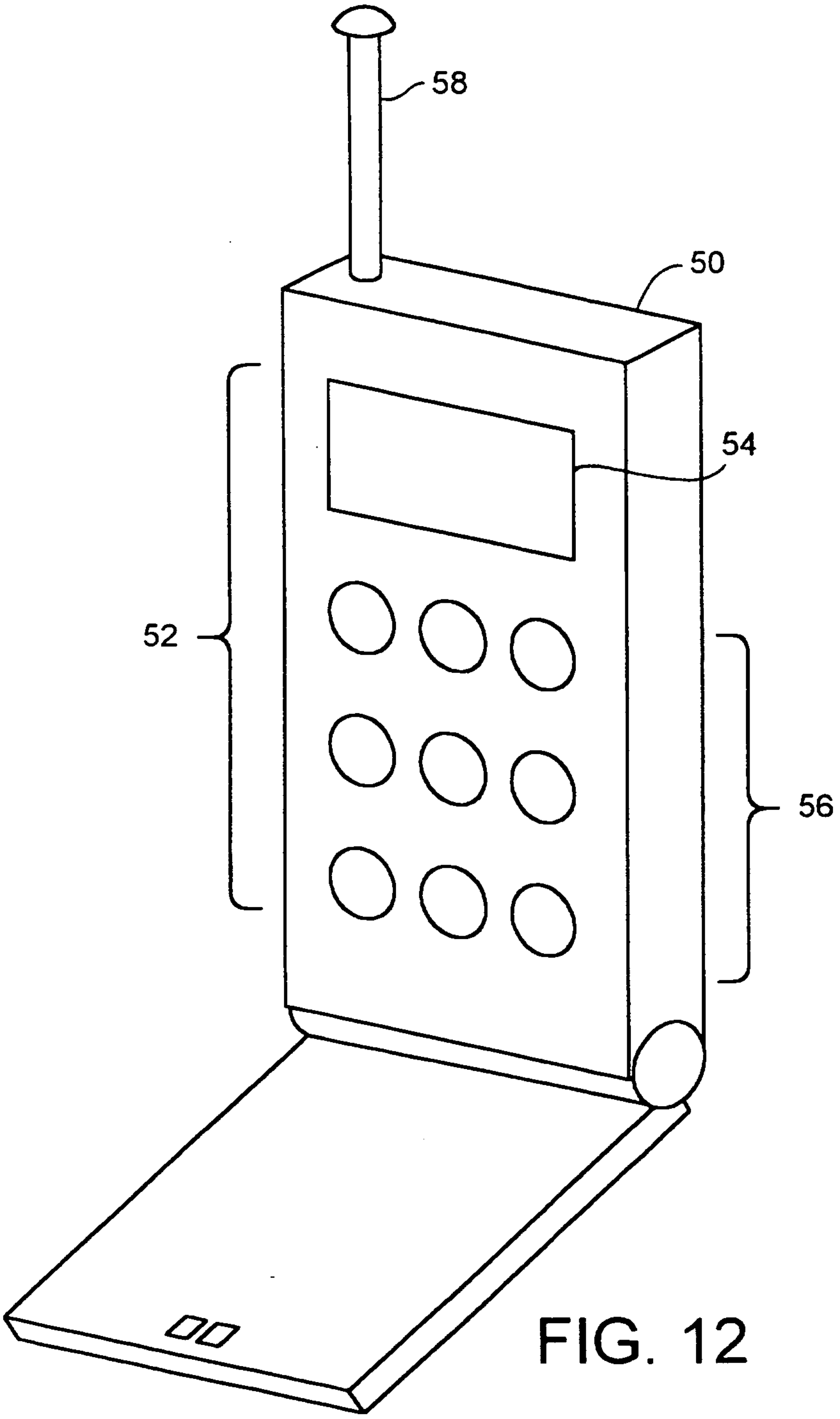


FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0374419 A
- EP 0864970 A